# DEMANDE DE BREVET EUROPEEN

(11) **EP 2 833 617 A1**
(43) Date de publication de la demande: **04.02.2015**
(21) Numéro de dépôt: 14178142.7
(22) Date de dépôt: 23.07.2014
(51) Int. Cl.: H04N 5/235, H04N 13/02

(54) **Procédé de synchronisation de plusieurs caméras entre elles d'un système de prise de vues, notamment un système de prise de vues stéréoscopique et système de prise de vues pour la mise en oeuvre dudit procédé**

(30) Priorité: 31.07.2013 FR 1357593
(71) Demandeur: Morpho, 92130 Issy-les-Moulineaux (FR)
(72) Inventeur: Rouh, Alain, 92445 ISSY LES MOULINEAUX (FR); Malrat, Benoît, 92445 ISSY LES MOULINEAUX (FR)
(74) Mandataire: Maillet, Alain

(57) **Abrégé**

La présente invention concerne un procédé de synchronisation de plusieurs caméras entre elles d'un système de prise de vues destiné à prendre une vue multiple d'une scène, lesdites caméras étant du type numérique CCD ou CMOS.

Selon l'invention, ledit procédé comporte les étapes de :
- éclairage de ladite scène au moyen d'un système d'éclairage dont l'intensité de l'éclairage varie périodiquement, et
- réglage de chacune desdites caméras dans un mode, dit anti-scintillement, où elles sont elles-mêmes synchronisées par verrouillage de phase sur les variations d'intensité lumineuse du système d'éclairage.

L'invention concerne également un système de prise de vues pour la mise en oeuvre dudit procédé.

## Description

La présente invention concerne un procédé de synchronisation de plusieurs caméras entre elles d'un système de prise de vues, notamment un système de prise de vues stéréoscopique. L'invention concerne également un tel système de prise de vues qui permet de mettre en oeuvre ledit procédé de synchronisation.

Dans les systèmes de prises de vues à plusieurs caméras, se pose souvent le problème de leur synchronisation sur une même base temporelle. On peut citer le cas de systèmes stéréoscopiques qui servent à la prise de vues 3D d'objets en mouvement. Pour être exploitable, pour déterminer un modèle 3D de l'objet qui se trouve devant les caméras, chaque image prise par une caméra du système stéréoscopique est mise en correspondance avec une image prise par l'autre caméra du système, normalement au même instant. Dans le cas d'objets statiques pris par les deux caméras, un décalage temporel entre ces deux images ne pose en général pas de problème. Les images correspondent dans la mesure où l'objet a les mêmes coordonnées spatiales dans l'une et l'autre image. Il n'en est pas de même d'objets qui sont en mouvement. En effet, dans ce cas, l'image de la première caméra est prise alors que l'objet se trouve à un endroit et l'image de la seconde caméra est, sans moyens spécifiques de synchronisation, prise alors que l'objet se trouve à un autre endroit différent du premier endroit dû au mouvement de l'objet. Si ces endroits sont très différents, les images ne se correspondent plus du tout et ne peuvent généralement pas être exploitées en vision 3D avec suffisamment de précision. Ceci est d'autant plus le cas lorsque l'objet en question a un mouvement de grande vitesse de défilement devant les caméras.

Ainsi, sans mise en oeuvre d'une méthode de synchronisation particulière, la précision de la mise en correspondance d'images issues de plusieurs caméras peut s'avérer insuffisante pour une exploitation en vision 3D.

Pour résoudre ce problème, il est connu d'utiliser des dispositifs de synchronisation qui transmettent, sous forme d'impulsions électriques, des références temporelles à chacune des caméras du système de prise de vues. De tels dispositifs de synchronisation sont connus, par exemple les dispositifs dits "Genlock" en terminologie anglo-saxonne. Ces dispositifs sont d'une réelle efficacité mais les caméras doivent être équipées de moyens pour recevoir les impulsions de synchronisation temporelle et pour s'y synchroniser. Ceci est généralement le cas de caméras sophistiquées et par conséquent coûteuses.

La présente invention a pour but de proposer un procédé de synchronisation de plusieurs caméras entre elles d'un système de prise de vues qui soit efficace en termes de précision de mise en correspondance d'images respectivement issues de ces caméras et qui ne s'adresse pas à des caméras sophistiquées et coûteuses.

A cet effet, un procédé de synchronisation de plusieurs caméras entre elles d'un système de prise de vues destiné à prendre une vue multiple d'une scène, lesdites caméras étant du type numérique CCD ou CMOS, est caractérisé en ce qu'il comporte les étapes de :
- éclairage de ladite scène au moyen d'un système d'éclairage dont l'intensité de l'éclairage varie périodiquement, et
- réglage de chacune desdites caméras dans un mode, dit anti-scintillement, où elles sont elles-mêmes synchronisées par verrouillage de phase sur les variations d'intensité lumineuse du système d'éclairage.

Selon un mode avantageux de l'invention, ledit système d'éclairage comporte un système d'éclairage piloté par un dispositif d'alimentation spécifique, lesdites caméras étant synchronisées sur les variations d'intensité lumineuse du système d'éclairage piloté par ledit dispositif d'alimentation spécifique.

La présente invention concerne également un système de prise de vues destiné à prendre une vue multiple d'une scène et constitué d'une pluralité de caméras du type numérique CCD ou CMOS. Il est caractérisé en ce qu'il comprend :
- un système d'éclairage dont l'intensité de l'éclairage varie périodiquement, lesdites caméras étant prévues pour fonctionner dans un mode, dit anti-scintillement, où elles sont elles-mêmes synchronisées par verrouillage de phase sur les variations d'intensité lumineuse d'éclairage du système d'éclairage.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 est une vue d'un système de prise de vue stéréoscopique illustrant le problème que cherche à résoudre la présente invention,
- la Fig. 2 est une vue d'un système de prise de vues selon la présente invention.

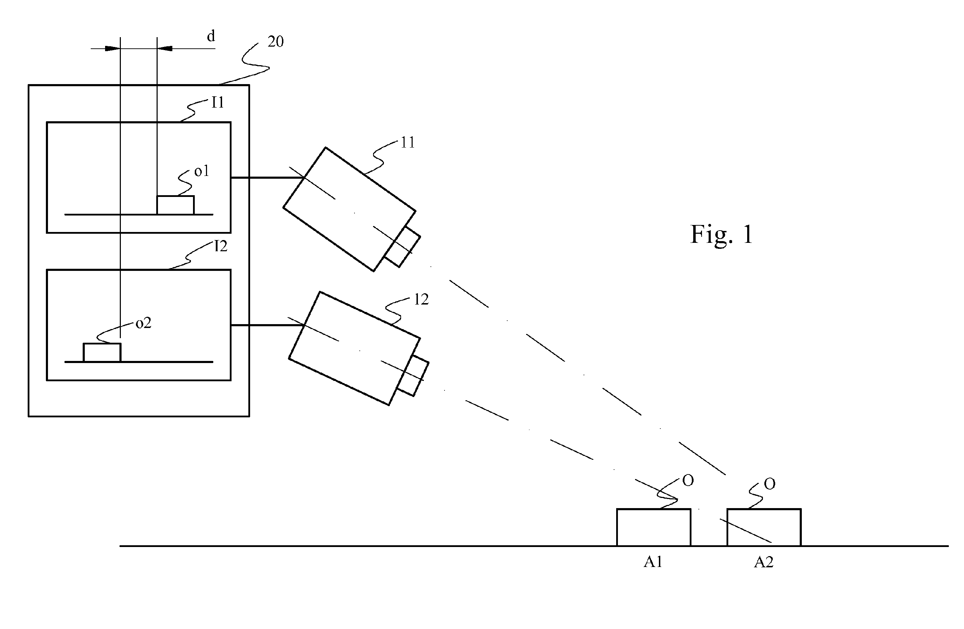

Le système de prise de vues représenté à la Fig. 1 comporte deux caméras 11 et 12 reliées à un dispositif de traitement d'images 20. L'invention s'applique à des systèmes de prise de vues qui comportent deux caméras ou plus.

Les caméras 11 et 12 sont des caméras numériques, par exemple du type CCD (Charge Coupled Device) ou CMOS (Complementary Metal Oxide Semiconductor). Des caméras de l'un ou l'autre type comprennent un capteur constitué de photosites répartis en mosaïque. Chaque photosite fonctionne en une première phase pendant laquelle il intègre la lumière qu'il reçoit pendant une période de temps, dite période d'intégration, accumulant ainsi une charge électrique, et en une seconde phase pendant laquelle la charge électrique qu'il a intégrée est transférée de manière appropriée vers des circuits de sortie de la caméra.

Le dispositif de traitement 20 est prévu pour effectuer des traitements des deux signaux d'image respectivement délivrés par les caméras 11 et 12. Ces traitements sont par exemple une mise en correspondance des images issues de ces signaux afin d'en déduire des caractéristiques géométriques et topologiques d'un objet O d'une scène qui se trouve devant les caméras 11 et 12. Ainsi, un modèle 3D de l'objet O peut être calculé par le dispositif de traitement 20.

On a représenté à la Fig. 1, à l'intérieur de la boîte représentant le dispositif de traitement 20, deux images I1 et 12 respectivement issues des signaux d'image délivrés par les caméras 11 et 12. On peut voir que l'objet O est représenté par un élément o1 dans l'image I1 de la caméra 11 et par un élément o2 dans l'image 12 de la caméra 12. On peut remarquer que ces deux éléments o1 et o2 sont décalés d'une image à l'autre d'une distance d. Cette distance d est due à deux phénomènes : la différence de vue des caméras I1 et 12 qui sont décalées spatialement l'une par rapport à l'autre et la différence temporelle entre les instants de prise de vue des caméras I1 et 12, si différence il y a, combinée au mouvement de l'objet O qui est passé, entre ces deux instants, du point A1 au point A2.

Le traitement qui est effectué par le dispositif de traitement 20 est généralement basé sur le premier de ces deux phénomènes, l'autre phénomène le perturbant dans son traitement. La synchronisation entre elles des caméras 11 et 12 permet de s'affranchir du second phénomène. En effet, si la différence temporelle est nulle (ou tout du moins est très petite), l'objet O n'a pratiquement pas ou pas du tout bougé entre les deux prises de vues respectivement opérées par les caméras 11 et 12.

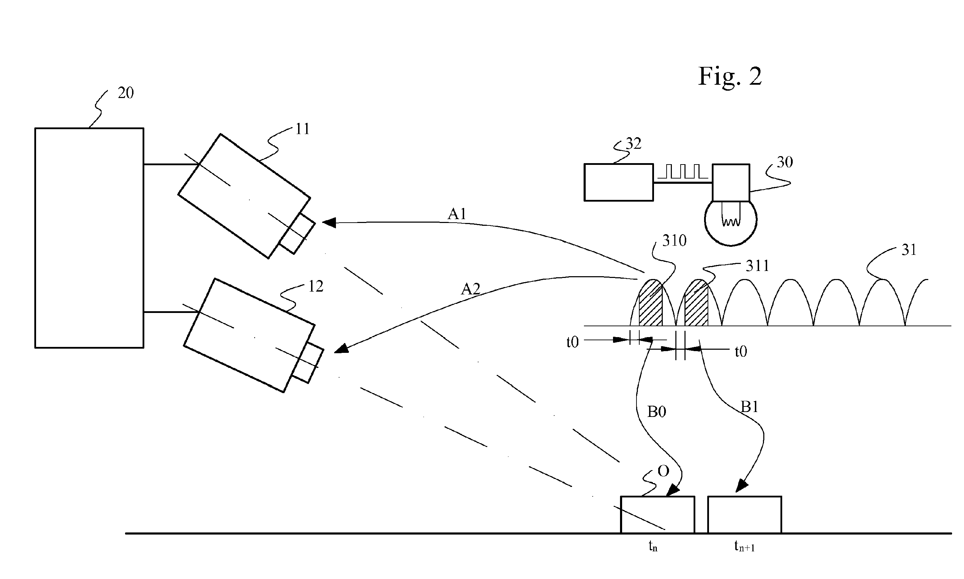

A la Fig. 2, on a représenté le système de prise de vues de la Fig. 1 avec ses deux caméras 11 et 12 et son dispositif de traitement 20. On a également représenté, sous forme d'une ampoule schématisée, un système d'éclairage 30 ainsi qu'un diagramme de son intensité lumineuse en fonction du temps 31, se présentant sous la forme d'une sinusoïde redressée (les alternances négatives étant redressées positivement). Cette variation d'intensité lumineuse avec le temps peut être celle d'une lampe fluorescente ou tube fluorescent, par exemple une lampe à vapeur de mercure à très basse pression, alimentée par le secteur. Il peut être également une source lumineuse au sodium, comme les éclairages publics, ou une source au néon. Il peut s'agir d'un système d'éclairage à diodes électroluminescentes LED pilotées par un dispositif d'alimentation "pulsé" approprié. Si la fréquence du secteur est de 50Hz, la période entre deux pics de la sinusoïde redressée est de 10ms. Si elle est de 60Hz, cette période est de 8,3ms.

Selon la présente invention, la synchronisation entre elles des caméras 11 et 12 est réalisée en les faisant toutes les deux fonctionner dans un mode, dit anti-scintillement, où elles sont elles-mêmes synchronisées avec les variations d'intensité lumineuse d'éclairage du système d'éclairage 30 qui est utilisé pour cette synchronisation.

De manière générale, une caméra numérique peut être sujette à des scintillements (flickers en terminologie anglo-saxonne) dans la vidéo résultante, notamment lorsque la période entre deux intégrations de son capteur n'est pas en rapport avec la fréquence de l'intensité lumineuse de la scène captée. Par exemple, le brevet US6271884 pose le problème de ce scintillement et propose une solution qui consiste à prévoir un temps d'intégration du capteur constitutif de la caméra considérée qui est un multiple de la période de la variation de l'intensité lumineuse. Si tel est le cas, il n'y a plus de scintillement.

Ainsi, si la fréquence de l'intensité lumineuse est de 50Hz, le temps d'intégration, selon ce brevet, devra être un multiple de 10ms. Si elle est de 60Hz, le temps d'intégration devra être un multiple de 8,33ms.

Une autre solution à ce problème de scintillement consiste, par verrouillage de phase, à synchroniser la période d'intégration avec la période de la variation de l'intensité lumineuse du signal lumineux. Ce mode de synchronisation par verrouillage de phase permet de résoudre le problème évoqué dans le préambule de la présente description de la synchronisation des caméras 11 et 12 entre elles. De plus, il permet des temps d'intégration plus courts que la première solution, ce qui peut être avantageux dans des conditions de forte luminosité, de prise de vues d'objets en déplacement rapide, ou encore de débits image importants.

Sur la Fig. 2, les périodes d'intégration des caméras 11 et 12 sont référencées 310 et 311. Les flèches A1 et A2 illustrent que les caméras 11 et 12 prennent une vue de la scène pendant la période de temps 310. Les flèches B0 et B1 illustrent que chaque caméra 11, 12 prend, pendant les périodes d'intégration 310 et 311, des vues respectivement pour les temps tn et tn+1. Les périodes d'intégration 310 et 311 commencent toutes les deux à un temps t0 après le passage à zéro de l'intensité lumineuse. Elles sont de durée inférieure à la période de l'intensité lumineuse. Ainsi, la phase du déclenchement de la prise de vues opérée par les caméras 11 et 12 est verrouillée sur l'intensité lumineuse à une valeur de phase correspondant au temps t0. Les périodes d'intégration 310 et 311 sont alors en synchronisme et verrouillées en phase avec la périodicité de la variation de l'intensité de l'éclairage du système d'éclairage 30.

Le système d'éclairage 30 qui est utilisé par la présente invention est généralement un système d'éclairage qui est présent dans la zone où se trouvent les caméras 11 et 12, par exemple pour éclairer cette zone. Ce système d'éclairage 30 n'est donc en général pas spécifique à la synchronisation entre elles des caméras 11 et 12 mais il est quand même utilisé à cette fin pour la périodicité de son intensité lumineuse émise, du fait notamment de son alimentation sur le secteur.

Ce système d'éclairage (à l'instar du système d'éclairage 30 de la Fig. 2) pourrait être avantageusement un système d'éclairage, par exemple à diodes électroluminescentes, piloté par un dispositif d'alimentation spécifique pulsée 32 délivrant un courant alternatif à l'une ou l'autre de ces fréquences 50Hz, 60Hz.

Il peut être un système d'éclairage complexe intégrant un premier système d'éclairage 30 de la zone dans laquelle se trouvent les caméras 11 et 12 alimentées par le secteur du lieu de ladite zone et un second système d'éclairage piloté par un dispositif d'alimentation spécifique, tel que le dispositif 32.

Avantageusement, dans ce dernier cas, si le premier système d'éclairage alimenté par le secteur 30 de la zone présente une fréquence de variation d'intensité lumineuse de 50Hz, le second système d'éclairage piloté par le dispositif 32 présente une fréquence de variation d'intensité lumineuse de 60Hz et vice versa. L'avantage d'une telle solution est d'effectuer la synchronisation des caméras 11 et 12 sur un éclairage dont les propriétés sont connues et maîtrisées, rendant le système plus fiable. Il permet aussi d'établir la synchronisation des caméras 11 et 12 sur une fréquence qui est différente de la fréquence d'alimentation du secteur du pays dans lequel se trouve le système de prise de vues et par conséquent de la fréquence des sources d'éclairage ambiant de ce pays.

## Revendications

1. Procédé de synchronisation de plusieurs caméras d'un système de prise de vues destiné à prendre une vue multiple d'une scène, lesdites caméras étant du type numérique CCD ou CMOS, **caractérisé en ce qu'**il comporte les étapes de :
- utilisation d'un système d'éclairage dont l'intensité de l'éclairage varie périodiquement,
- éclairage de ladite scène au moyen dudit système d'éclairage, et
- réglage de chacune desdites caméras dans un mode, dit anti-scintillement, où elles sont elles-mêmes synchronisées par verrouillage de phase sur les variations d'intensité lumineuse du système d'éclairage.

2. Procédé de synchronisation selon la revendication 1, **caractérisé en ce que** ladite étape d'utilisation consiste à utiliser un système d'éclairage qui est alimenté par le secteur et dont l'intensité lumineuse varie avec celui-ci, lesdites caméras étant synchronisées par verrouillage de phase sur les variations d'intensité lumineuse dudit système d'éclairage.

3. Procédé de synchronisation selon la revendication 1 ou 2, **caractérisé en ce que** dite étape d'utilisation consiste à utiliser un système d'éclairage qui est piloté par un dispositif d'alimentation spécifique pulsé et dont l'intensité lumineuse varie à la fréquence du courant alternatif délivré par ledit dispositif, lesdites caméras étant synchronisées par verrouillage de phase sur les variations d'intensité lumineuse dudit système d'éclairage piloté par ledit dispositif d'alimentation spécifique.

4. Système de prise de vues destiné à prendre une vue multiple d'une scène et constitué d'une pluralité de caméras du type numérique CCD ou CMOS, **caractérisé en ce qu'**il comprend :
- un système d'éclairage dont l'intensité de l'éclairage varie périodiquement, lesdites caméras étant prévues pour fonctionner dans un mode, dit anti-scintillement, où elles sont elles-mêmes synchronisées par verrouillage de phase sur les variations d'intensité lumineuse d'éclairage du système d'éclairage.

5. Système de prise de vues selon la revendication 4, **caractérisé en ce que** ledit système d'éclairage comporte un système d'éclairage piloté par un dispositif d'alimentation spécifique, lesdites caméras étant synchronisées sur les variations d'intensité lumineuse dudit système d'éclairage piloté par ledit dispositif d'alimentation spécifique.

6. Système de prise de vues selon la revendication 5, **caractérisé en ce que** ledit système d'éclairage piloté est piloté par un dispositif d'alimentation pulsée à une fréquence différente de celle du secteur.
